(19) Europäisches Patentamt
European Patent Office
Office européen des brevets

(11) **EP 4 397 691 A1**

(12) **EUROPÄISCHE PATENTANMELDUNG**

(43) Veröffentlichungstag:
**10.07.2024 Patentblatt 2024/28**

(21) Anmeldenummer: **23150581.9**

(22) Anmeldetag: **06.01.2023**

(51) Internationale Patentklassifikation (IPC):
**C08G 65/26** (2006.01)

(52) Gemeinsame Patentklassifikation (CPC):
**C08G 65/2663**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Covestro Deutschland AG**
**51373 Leverkusen (DE)**

(72) Erfinder:
 • **Eichmann, Marcus**
   **40547 Düsseldorf (DE)**

 • **Clerens, Peter**
   **9840 De Pinte (BE)**
 • **Vereycken, Philip**
   **2627 Schelle (BE)**
 • **Maes, Sarah**
   **2050 Antwerpen (BE)**
 • **Timmermans, Tim**
   **2940A Hoevenen (BE)**

(74) Vertreter: **Levpat**
**c/o Covestro AG**
**Gebäude K12**
**51365 Leverkusen (DE)**

(54) **VERFAHREN ZUR HERSTELLUNG EINES POLYOXYALKYLENPOLYOLS**

(57) Die vorliegende Erfindung betrifft ein Verfahren zur Herstellung eines Polyoxyalkylenpolyols, bevorzugt eines Polyetherpolyols, umfassend der Reaktion einer H-funktionellen Starterverbindung mit einem Alkylenoxid in mindestens zwei Teilmengen in Gegenwart eines Doppelmetallcyanid-Katalysators.

EP 4 397 691 A1

**Beschreibung**

Die vorliegende Erfindung betrifft ein Verfahren zur Herstellung eines Polyoxyalkylenpolyols, bevorzugt eines Polyetherpolyols, umfassend der Reaktion einer H-funktionellen Starterverbindung mit einem Alkylenoxid in mindestens zwei Teilmengen in Gegenwart eines Doppelmetallcyanid-Katalysators.

Poloxyalkylenpolyole, bevorzugt Polyetherpolyole werden im Allgemeinen durch Reaktion einer H-funktionellen Starterverbindung mit einem Alkylenoxid in Gegenwart von Katalysatoren hergestellt. Neben sauren und basischen Katalysatoren eignen sich speziell Doppelmetallcyanid (DMC)-Katalysatoren. Im Unterschied zu den basischen Katalysatoren muss der DMC-Katalysator vor der eigentlichen Alkoxylierung aktiviert werden, was durch Zugabe einer Teilmenge des Alkylenoxids erfolgt.

In EP 1 206 498 B1 wird ein Verfahren zur Herstellung von Polyetherpolyolen durch DMCkatalysierte Polyaddition von Alkylenoxiden an Starterverbindungen mit aktiven Wasserstoffatomen offenbart, wobei dem Reaktor während der Induktionensphase das Alkylenoxid kontinuierlich zugeführt wird und der Druck konstant gehalten wird. Hierbei dient die Induktionsphase der Aktivierung des Doppelmetallcyanid-Katalysators durch Zugabe geringer Mengen an Alkylenoxid, so dass im resultierenden Beispiel eine Induktionszeit von 224 min resultiert. Diese isobare Fahrweise während der Induktionsphase erfordert eine komplexe Regelungstechnik bzw. muss diese Regelungstechnik auch für einen Wechsel zwischen der isobaren Aktivierungsphase und der nachfolgenden Propoxylierung geeignet sein, was die regelungs- und sicherheitstechnische Planung und technische Implementierung des Verfahrens deutlich komplexer gestaltet.

In einem weiteren, technisch-etablierten Konzept, wie beispielsweise in WO97/23544 offenbart, erfolgt die Aktivierung des Doppelmetallcyanid-Katalysators durch Zugabe einer diskreten Teilmenge an Alkylenoxid, speziell Propylenoxid (englisch: PO-Shot, PO propylene oxide), wobei hierbei der Druckabfall nach Zugabe des Propylenoxids als Maß für die Aktivierung des Doppelmetallcyanid-Katalysators regelungstechnisch erfasst wird. Insofern ein deutlicher Druckabfall resultiert, ist von einer vollständigen Aktivierung des Doppelmetallcyanid-Katalysators auszugehen. Im Anschluss wird dann die eigentliche Alkoxylierung durchgeführt. Falls der vorher definierte Druckabfall während der Aktivierungsphase nicht bzw. mindestens nicht ausreichend schnell erfolgt, ist hingegen von keiner bzw. nicht ausreichenden Aktivierung des DMC-Katalysators auszugehen. Auch dieses Verfahren erfordert zwar eine komplexe Regelungstechnik zur Erfassung und Auswertung der Druckverlaufs während der Aktivierungsphase des DMC-Katalysators. Diese ist jedoch weniger aufwendig als die Regelung des Reaktordrucks über die Epoxidzufuhr während der Aktivierungsphase, welche in EP 1 206 498 B1 offenbart wird.

Aufgabe der vorliegenden Erfindung war es, ein verbessertes und regelungstechnisch einfaches und technisch sicheres Verfahren zur Herstellung eines Polyoxyalkylenpolyols, bevorzugt eines Polyetherpolyols umfassend der Reaktion einer H-funktionellen Starterverbindung mit einem Alkylenoxid in Gegenwart eines Doppelmetallcyanid-Katalysators bereitzustellen, bei dem die Reaktorszykluszeit, d.h. die Produktionsdauer zur Herstellung des Polyoxyalkylenpolyols, bevorzugt des Polyetherpolyols reduziert wird, wodurch die Kapazität einer bestehenden Anlage erhöht wird. Hierzu soll auf eine komplexe Regelungstechnik, d.h. einem Umschalten der Regelungs- und Sicherheitsfunktionen zwischen der Aktivierungs- und eigentlichen Alkoxylierungsphase verzichtet werden. Das Polyoxyalkylenpolyol, bevorzugt des Polyetherpolyol des erfindungsgemäßen Verfahrens soll vergleichbare Produkteigenschaften wie Viskosität und Polydispersitätsindex im Vergleich zu technisch vorbeschriebenen Herstellungsverfahren aufweisen.

Erfindungsgemäß gelöst wird die Aufgabe durch ein Verfahren zur Herstellung eines Polyoxyalkylenpolyols, bevorzugt eines Polyetherpolyols, umfassend der Reaktion einer H-funktionellen Starterverbindung (A) mit einem Alkylenoxid (B) in mindestens zwei Teilmengen in Gegenwart eines Doppelmetallcyanid-Katalysators (C), wobei das Verfahren folgende Schritte umfasst:

a) Bereitstellen einer Suspension (D) enthaltend den Doppelmetallcyanid-Katalysator (C) und Einstellen eines Startdrucks p(a);

b) Zugabe einer ersten Teilmenge des Alkylenoxids (B) mit einem Massenstrom $\dot{m}_{AO}(b)$ zu der Suspension (D) aus Schritt a) unter Bildung eines aktivierten Doppelmetallcyanid-Katalysators (C);

c) Zugabe einer zweiten Teilmenge des Alkylenoxids (B) mit einem Massenstrom $\dot{m}_{AO}(c)$ zur Suspension des aktivierten Doppelmetallcyanid-Katalysators (C) aus Schritt b) unter Bildung des Polyoxyalkylenpolyols;

wobei der Schritt b) ohne eine Unterbrechung der Alkylenoxidzufuhr in den Schritt c) übergeht;
und wobei der gegenüber dem Startdruck p(a) auftretende maximale Druckanstieg $\Delta p(b)$ in Schritt b) 0,0 bar < $\Delta p(b)$ < 2,5 bar bevorzugt 0,1 bar< $\Delta p(b)$ < 1,5 bar, besonders bevorzugt 0,2 bar < $\Delta p(b)$ < 1,0 bar ist.

Der Druckanstieg $\Delta p(b)$ stellt dabei ein lokales Maximum des Druckanstiegs dar. Nach Erreichen von $\Delta p(b)$ fällt der Druck zunächst wieder, womit Schritt c) beginnt. Mit Erreichen von $\Delta p(b)$ liegt auch der aktivierte Doppelmetallcyanid-Katalysator (C) vor.

Ausführungsformen des Verfahrens und weitere Aspekte der Erfindung werden nachfolgend beschrieben. Sie können beliebig miteinander kombiniert werden, sofern sich aus dem Kontext nicht eindeutig das Gegenteil ergibt.

Als geeignete H-funktionelle Starterverbindungen (A), auch als Starter bezeichnet, können Verbindungen mit für die Alkoxylierung aktiven H-Atomen eingesetzt werden. Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Starterverbindung (A) können beispielsweise mindestens eine Verbindung ausgewählt werden aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, polymere Formaldehydverbindungen, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen (A) können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindung (A) geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Starterverbindungen (A) können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PFT® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen (A) können auch aus der Substanzklasse der Polyesterpolyole ausgewählt sein, insbesondere solchen mit einem Molekulargewicht Mn im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydro-phthalsäure¬anhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des Weiteren können als H-funktionelle Starterverbindungen (A) Polycarbonatdiole eingesetzt werden, insbesondere solche mit einem Molekulargewicht Mn im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200.

In einer weiteren Ausführungsform der Erfindung können Polyethercarbonatpolyole, Polycarbonatpolyole und/oder Polyetherestercarbonatpolyole als H-funktionelle Starterverbindungen (A) eingesetzt werden. Insbesondere können Polyethercarbonatpolyole, Polycarbonatpoylole und/oder Polyetherestercarbonatpolyole durch Umsetzung von Alkylenoxiden, bevorzugt Ethylenoxid, Propylenoxid oder deren Mischungen, optional weiterer Co-Monomeren mit CO2 in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549A1) und/oder Mangan-Salen Komplexe. Eine Übersicht über die bekannten Katalysatoren für die Copolymerisation von Alkylenoxiden und CO2 gibt zum Beispiel Chemical Communications 47(2011)141-163. Durch die Verwendung unterschiedlicher Katalysatorsysteme, Reaktionsbedingungen und/oder reaktionssequenzen erfolgt hierbei die Bildung von statistischen, alternierenden, blockartigen oder gradientenartigen Polyethercarbonatpolyolen, Polycarbonatpoylolen und/oder Polyetherestercarbonatpolyolen. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.

Die H-funktionellen Starterverbindungen (A) weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen werden entweder einzeln oder als Gemisch aus mindestens zwei H-funktionellen Starterverbindungen eingesetzt.

In einer Ausführungsform des erfindungsgemäßen Verfahrens ist die H-funktionelle Starterverbindung (A) ein Polyetherpolyol, ein Polyesterpolyol, ein Polyetheresterpolyol, ein Polyethercarbonatpolyol, ein Polycarbonatpolyol und/oder ein Polyacrylatpolyol bevorzugt ein Polyetherpolyol.

Die Polyetherpolyole haben bevorzugt eine OH-Funktionalität von 2 bis 4 und ein Molekulargewicht Mn im Bereich von 62 bis 8000 g/mol, bevorzugt ein Molekulargewicht und mehr bevorzugt von 92 g/mol bis 2000 g/mol.

Allgemein können für das erfindungsgemäße Verfahren Alkylenoxide (Epoxide) mit 2-45 Kohlenstoffatomen eingesetzt werden. In einer bevorzugten Ausführungsform des Verfahrens wird das Alkylenoxid ausgewählt aus mindestens einer Verbindung der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, Allylglycedylether, Vinylcyclohexenoxid, Cyclooctadienmonoepoxid, Cyclododecatrienmonoepoxid, Butadienmonoepoxid, Isoprenmonoepoxid, Limonenoxid, 1,4-Divinylbenzolmonoepoxid, 1,3-Divinylbenzolmonoepoxid, Glycidylacrylat und Glycidylmethacrylat ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether sowie epoxidfunktionelle Alkyoxysilane wie beispielsweise 3-Glycidyloxypropyltrimethoxysilan, 3-Glycidyloxypropyltriethoxysilan, 3 -Glycidyloxypropyltripropoxysilan, 3-Glycidyloxypropyl-methyl-dimethoxysilan, 3-Glycidyloxypropylethyldiethoxysilan und 3-Glycidyloxypropyltrlisopropoxysilan.

In einer Ausführungsform des erfindungsgemäßen Verfahrens ist das Alkylenoxid Propylenoxid und/oder Ethylenoxid, bevorzugt Propylenoxid.

Ebenfalls kann das mindestens eine Alkylenoxid (B) dem Reaktor auf unterschiedliche Weise zugeführt werden: Möglich ist eine Dosierung in die Gasphase oder direkt in die Flüssigphase, z. B. über ein Tauchrohr oder einen in der Nähe des Reaktorbodens in einer gut durchmischten Zone befindlichen Verteilerring. Die Dosierung in die Flüssigphase ist die bevorzugte Variante. Bei Dosierung in die Flüssigphase sollten die Dosieraggregate selbstleerend ausgelegt sein, beispielsweise durch Anbringen der Dosierbohrungen an der Unterseite des Verteilerrings. Die Alkylenoxide (B) werden dem Reaktor kontinuierlich derart zugeführt, dass die sicherheitstechnischen Druckgrenzen bzw. Maximaldrücke $p\_max$ des verwendeten Reaktorsystems nicht überschritten werden. Diese, Maximaldrücke werden automatisch von einem von der Prozessregelung im Prozessleitsystem unabhängigen Sicherheitssystem überwacht und bei Überschreitung dieses Maximaldrucks erfolgt eine Alamierung und automatisch die Abschaltung der Zufuhr des Alkylenoxids. Speziell in Schritt b) und während der Anfangsphase des Schritts c) wird zusätzlich ein Maximaldruck $p\_max(b)$ automatisch von dem Prozessleitsystem oder dem Sicherheitssystem überwacht und bei Überschreitung dieses Maximaldrucks erfolgt nach einer vorherigen Alamierung automatisch die Abschaltung der Zufuhr des Alkylenoxids, wobei $p\_max(b)$ niedriger als der Maximaldruck $p\_max$ ist.

Werden mehrere Alkylenoxide, wie beispielsweise Alkylenoxid (B), dosiert, können die jeweiligen Alkylenoxide dem Reaktor separat oder als Alkylenoxid-Mischung zugeführt werden. Eine Vermischung der Alkylenoxide kann beispielsweise durch ein in der gemeinsamen Dosierstrecke befindliches Mischaggregat erreicht werden ("inline-blending"). Es hat sich auch bewährt, Alkylenoxide pumpendruckseitig in einen beispielsweise über Wärmetauscher geführten Umpumpkreis-lauf einzeln oder (vor-)gemischt zu dosieren. Für die gute Durchmischung mit dem Reaktionsmedium ist es dann von Vorteil, ein hochscherendes Mischaggregat in den Alkylenoxid-/Reaktionsmediumstrom zu integrieren. Die Temperatur der exothermen Poly-merisation (Alkylenoxid¬additions¬reaktion) wird durch Kühlung auf dem gewünschten Niveau gehalten bzw. auf das gewünschte Niveau eingestellt. Gemäß dem Stand der Technik zur Auslegung von Polymerisationsreaktoren für exotherme Reaktionen (z.B. Ullmann's Encyclopedia of Industrial Chemistry, Vol. B4, pp 167ff, 5th Ed., 1992) erfolgt eine solche Kühlung im Allgemeinen über die Reaktorwand (z.B. Doppelmantel, Halbrohr-schlange) sowie mittels weiterer intern im Reaktor und/oder extern im Umpumpkreislauf ange¬ordneter Wärmetauscherflächen, z.B. an Kühlschlangen, Kühlkerzen, Platten- Rohr-bündel- oder Mischerwärmetauschern.

Als Katalysator für die Herstellung des erfindungsgemäßen Polyoxylkylenpolyols, bevorzugt des Polyetherpolyols wird ein DMC-Katalysator (Doppel-Metall-Cyanid-Katalysator) (C) eingesetzt. Es können auch zusätzlich andere Katalysatoren eingesetzt werden, wobei dies nicht bevorzugt ist. Für die Copolymerisation von Alkylenoxiden und $CO_2$ können beispielsweise zusätzlich oder alternativ Zink-Carboxylate oder Kobalt-Salen-Komplexe eingesetzt werden. Geeignete Zink-Carboxylate sind beispielsweise Zinksalze von Carbonsäuren, insbesondere Dicarbonsäuren, wie Adipinsäure oder Glutarsäure. Eine Übersicht über die bekannten Katalysatoren für die Copolymerisation von Alkylenoxiden und $CO_2$ gibt zum Beispiel Chemical Communications 47(2011)141-163.

Die in dem erfindungsgemäßen Verfahren vorzugsweise einsetzbaren DMC-Katalysator (C) enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Der im erfindungsgemäßen Verfahren eingesetzte DMC-Katalysator (C) wird vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(2.) wobei im zweiten Schritt der Feststoff aus der aus (a) erhaltenen Suspension durch bekannte Techniken (wie Zentrifugation oder Filtration) abgetrennt wird,
(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die im erfindungsgemäßen Verfahren eingesetzten DMC-Katalysator (C) enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (I) auf,

$$M(X)_n \qquad (I),$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (II) auf,

$$M_r(X)_3 \qquad (II),$$

wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (III) auf,

$$M(X)_S \qquad (III),$$

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,

oder geeignete Metallsalze weisen bevorzugt eine Zusammensetzung nach der allgemeinen Formel (IV) auf,

$$M(X)_t \qquad (IV),$$

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (V) auf

$$(Y)_a \, M'(CN)_b \, (A)_c \qquad (V),$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (VI)

$$M_x[M'_{x'}(CN)_y]_z \qquad (VI),$$

worin M wie in den Formeln (I) bis (IV) und
M' wie in Formel (V) definiert ist, und
x, x', y und z ganzzahlig sind und so gewählt, dass die Elektronenneutralität der Doppelmetallcyanidverbindung gegeben ist.

Vorzugsweise ist

x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt enthält der Doppelmetallcyanidkatalysator (C) Zinkhexacyanokobaltat(III).

Die bei der Herstellung der DMC-Katalysators (C) zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykol-mono-methylether und 3-Methyl-3-oxetan-methanol). Höchst bevorzugte organische Komplexliganden sind ausgewählt aus mindestens einer Verbindung der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung des erfindungsgemäß einsetzbaren DMC-Katalysators (C) eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-coacrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung des erfindungsgemäß einsetzbaren DMC-Katalysatores (C) die wässrige Lösung des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

In einer Ausführungsform des erfindungsgemäßen Verfahren wird der Doppelmetallcyanid-Katalysator (C) in einer Konzentration von 0,0001 Gew.-% bis 0,1 Gew.-% bevorzugt von 0,001 Gew.-% bis 0,05 Gew.-% bezogen auf die Menge des herzustellenden Polyoxyalkylenpolyols, bevorzugt des Polyetherpolyols eingesetzt.

Ein Charakteristikum des DMC-Katalysators ist die spezifische "catch-up" Kinetik (M. Ionescu; Chemistry and Technology of Polyols for Polyurethanes 2nd Edition, Rapra Techn. Ltd., 2016 Abschnitt 5.1), wobei für Gemische aus H-funktionellen Starterverbindungen aus einer niedrigen Äquivalentmolmasse und einer hohen Äquivalentmolmasse, die Alkoxylierung, im Speziellen die Propoxylierung, bevorzugt bzw. ausschließlich an der H-funktionellen Starterverbindung mit der niedrigeren Äquivalentmolmasse erfolgt.

In einer Ausführungsform des erfindungsgemäßen Verfahrens liegt der Doppelmetallcyanid-Katalysator (C) in einem Suspensionsmittel ohne H-funktionelle Gruppen (E-1) und/oder mit H-funktionellen Gruppen (E-2) in der Suspension (D) vor.

In einer Ausführungsform des erfindungsgemäßen Verfahrens ist die die Suspension (D) enthaltend den Doppelmetallcyanid-Katalysator (C) in Schritt a) durch Lösen des Doppelmetallcyanid-Katalysators (C) in einem Suspensionsmittel mit freien H-funktionelle Gruppen (E-2) erhältlich. In einer bevorzugten Ausführungsform des erfindungsgemäßen Verfahrens wird die die Suspension (D) enthaltend den Doppelmetallcyanid-Katalysator (C) in Schritt a) durch Lösen des Doppelmetallcyanid-Katalysators (C) in einem Suspensionsmittel mit freien H-funktionelle Gruppen (E-2) hergestellt.

In einer weniger bevorzugten Ausführungsform des erfindungsgemäßen Verfahrens liegt der Doppelmetallcyanid-Katalysator (C) in einem Suspensionsmittel ohne H-funktionelle Gruppen (E-1) in der Suspension (D) vor.

In einer weiteren, mehr bevorzugten Ausführungsform des erfindungsgemäßen Verfahrens liegt der Doppelmetallcyanid-Katalysator (C) in einem Suspensionsmittel mit H-funktionellen Gruppen (E-2) in der Suspension (D) vor, wobei das Suspensionsmittel mit freien H-funktionellen Gruppen (E-2) eine oder mehrere Verbindung(en) ein Polyetherpolyol, ein Polyesterpolyol, ein Polyetheresterpolyol, ein Polyethercarbonatpolyol, ein Polycarbonatpolyol und/oder ein Polyacrylatpolyol bevorzugt ein Polyetherpolyol ist. Hierbei entspricht der Definition des vorgenannten Polyetherpolyols, des vorgenannten Polyesterpolyols, des vorgenannten Polyetheresterpolyols, des vorgenannten Polyethercarbonatpolyols, des vorgenannten Polycarbonatpolyols und des vorgenannten Polyacrylatpolyol für das Suspensionsmittel mit H-funktionellen Gruppen (E-2) derer, welche auch für die H-funktionelle Starterverbindung (A) genannt wurde.

In einer bevorzugten Ausführungsform des erfindungsgemäßen Verfahrens ist das Suspensionsmittel mit freien H-funktionellen Gruppen (E-2) die H-funktionelle Starterverbindung (A).

In einer Ausführungsform des erfindungsgemäßen Verfahrens wird die Suspension (D) in Schritt a) enthaltend den Doppelmetallcyanid-Katalysator (C) und die die H-funktionelle Starterverbindung (A) erhalten durch Umsetzung einer H-funktionellen Starterverbindung (F) mit einem Alkylenoxid (G) in Gegenwart des Doppelmetallcyanid-Katalysators (H), wobei die Äquivalentmolmasse der H-funktionellen Starterverbindung (F) kleiner ist als die der H-funktionellen Starterverbindung (A), wobei aufgrund der bereits diskutierten "catch-up" Kinetik als Charakteristikum des DMC-Katalysators (C) die H-funktionelle Starterverbindung (F) vorrangig bzw. ausschließlich alkoxyliert, im Speziellen propoxyliert wird.

Unter der Äquivalentmolmasse aktive Wasserstoffatome enthaltender Materialien, wie H-funktioneller Starterverbindungen ist die durch die Zahl der aktiven Wasserstoffatome geteilte Gesamtmasse des aktive Wasserstoffatome enthaltenden Materials zu verstehen. Im Falle von hydroxygruppen-haltigen Materialien (wie beispielsweise Polyoxyalkylenpolyolen) steht sie in folgender Beziehung zur OH-Zahl (OHZ):

$$\text{Äquivalentmolmasse} = (56100 \, [\text{mg} / \text{mol}]) / (\text{OHZ} \, [\text{mg KOH/g}]) \qquad \text{(VII)}$$

Die Ermittlung der Äquivalentmolmasse des Polyoxyalkylenpolyols erfolgt also gemäß Formel (VII), wobei die die OHZ des Polyoxyalkylenpolyols nach DIN 53240 ermittelt oder spektroskopisch über NIR bestimmt werden kann.

Hierbei wird als H-funktionelle Starterverbindung (F) ein Polyetherpolyol, ein Polyesterpolyol, ein Polyetheresterpolyol, ein Polyethercarbonatpolyol, ein Polycarbonatpolyol und/oder ein Polyacrylatpolyol bevorzugt ein Polyetherpolyol gemäß der erfindungsgemäßen Definition für die H-funktionelle Starterverbindung (A) verwendet.

Als Alkylenoxid (G) kann erfindungsgemäß eine oder mehrere Verbindungen verwendet werden, wobei die Definition des Alkylenoxids (G) der für das Alkylenoxid (B) entspricht. Bevorzugt wird als Alkylenoxid (G) Propylenoxid und/oder Ethylenoxid, bevorzugt Propylenoxid verwendet.

Doppelmetallcyanid-Katalysator (H)

Als Doppelmetallcyanid-Katalysator (H) kann erfindungsgemäß eine oder mehrere Verbindungen verwendet werden, wobei die Definition des Doppelmetallcyanid-Katalysators (H) der für den Doppelmetallcyanid-Katalysator (C) entspricht.

In einer bevorzugten Ausführungsform des erfindungsgemäßen Verfahrens ist der Doppelmetallcyanid-Katalysator (H) identisch mit dem Doppelmetallcyanid-Katalysator (C).

Als H-funktionelle Starterverbindung (I) kann erfindungsgemäß eine oder mehrere Verbindungen verwendet werden, wobei die Definition der H-funktionellen Starterverbindung (I) der für die H-funktionelle Starterverbindung (A) entspricht.

Als Alkylenoxid (J) kann erfindungsgemäß eine oder mehrere Verbindungen verwendet werden, wobei die Definition des Alkylenoxids (J) der für das Alkylenoxid (B) entspricht. Bevorzugt wird als Alkylenoxid (J) Propylenoxid und/oder Ethylenoxid, bevorzugt Propylenoxid verwendet.

Als Doppelmetallcyanid-Katalysator (K) kann erfindungsgemäß eine oder mehrere Verbindungen verwendet werden, wobei die Definition des Doppelmetallcyanid-Katalysators (K) der für den Doppelmetallcyanid-Katalysator (C) entspricht.

Erfindungsgemäß ist die Äquivalentmolmasse der H-funktionellen Starterverbindung (L) kleiner als die der H-funktionellen Starterverbindung (A), so dass die H-funktionellen Starterverbindung (L) aufgrund der bereits diskutierten "catch-up" Kinetik als Charakteristikum des DMC-Katalysators (C) bevorzugt alkoxyliert, im Speziellen propoxyliert wird.

Bevorzugte H-funktionelle Starterverbindungen (L) sind Alkohole mit einer Zusammensetzung nach der allgemeinen Formel (VIII),

$$HO-(CH_2)X-OH \qquad (VIII)$$

wobei x eine Zahl von 1 bis 20, bevorzugt eine gerade Zahl von 2 bis 20 ist. Beispiele für Alkohole gemäß Formel (I) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen (L) um mindestens eine Verbindung ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole mit einem zahlenmittleren Molekulargewciht von , wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist.

Im erfindungsgemäßen Verfahren wird in Schritt a) eine Suspension (D) enthaltend den Doppelmetallcyanid-Katalysator (C) bereitgestellt und ein Startdrucks p(a) eingestellt.

In einer Ausführungsform des erfindungsgemäßen Verfahrens ist die Suspension (D) enthaltend den Doppelmetallcyanid-Katalysator (C) in Schritt a) durch Lösen des Doppelmetallcyanid-Katalysator (C) in einem Suspensionsmittel mit freien H-funktionelle Gruppen (E-2) erhältlich. In einer Ausführungsform des erfindungsgemäßen Verfahrens wird die Suspension (D) enthaltend den Doppelmetallcyanid-Katalysator (C) in Schritt a) durch Lösen des Doppelmetallcyanid-Katalysator (C) in einem Suspensionsmittel mit freien H-funktionelle Gruppen (E-2) hergestellt.

In einer Ausführungsform des erfindungsgemäßen Verfahrens wird die Suspension (D) in Schritt a) enthaltend den Doppelmetallcyanid-Katalysator (C) und die die H-funktionelle Starterverbindung (A) erhalten wird durch Umsetzung einer H-funktionellen Starterverbindung (F) mit einem Alkylenoxid (G) in Gegenwart eines Doppelmetallcyanid-Katalysators (H), wobei die Äquivalentmolmasse der H-funktionellen Starterverbindung (F) kleiner ist als die der H-funktionellen Starterverbindung (A). In einer Ausführungsform des erfindungsgemäßen Verfahrens ist der Doppelmetallcyanid-Katalysators (H) identisch mit dem Doppelmetallcyanid-Katalysators (C), wobei hierunter zu verstehen ist, dass der DMC-Katalysator (H) zur Herstellung der H-funktionellen Starterverbindung (A) auch für die Herstellung des Polyoxyalkylenpolyols, bevorzugt des Polyetherpolyols verwendet wird und kein weiterer DMC-Katalysator zugesetzt wird.

In einer weiteren alternativen, Ausführungsform des erfindungsgemäßen Verfahrens ist das erfindungsgemäße Suspensionsmittel mit freien H-funktionellen Gruppen (A) in Schritt a) das erfindungsgemäße Polyoxyalkylenpolyol bevorzugt das erfindungsgemäße Polyetherpolyol. Bevorzugt ist die Suspension (D) in Schritt a) enthaltend den Doppelmetallcyanid-Katalysator (C) und das Polyoxyalkylenpolyol bevorzugt das Polyetherpolyol erhältlich durch Umsetzung einer H-funktionellen Starterverbindung (I) mit einem Alkylenoxid (J) in Gegenwart eines Doppelmetallcyanid-Katalysators (K). Besonders bevorzugt wird die Suspension (D) in Schritt a) enthaltend den Doppelmetallcyanid-Katalysator (C) und das Polyoxyalkylenpolyol bevorzugt das Polyetherpolyol erhalten durch Umsetzung einer H-funktionellen Starterverbindung (I) mit einem Alkylenoxid (J) in Gegenwart eines Doppelmetallcyanid-Katalysators (K).

In einer weniger bevorzugten Ausführungsform des erfindungsgemäßen Verfahrens ist der Doppelmetallcyanid-Katalysator (K) identisch mit dem Doppelmetallcyanid-Katalysator (C).

Im erfindungsgemäßen Verfahren wird in Schritt b) eine erste Teilmenge des Alkylenoxids (B) mit einem Massenstrom $\dot{m}_{AO}(b)$ zu der Suspension (D) aus Schritt a) unter Bildung eines aktivierten Doppelmetallcyanid-Katalysators (C) zugegeben.

Hierbei kann der Massenstrom $\dot{m}_{AO}(b)$ in Schritt b) mit einer konstanten kontinuierlichen Dosierrate oder einer variierenden Dosierrate zugegeben werden.

Der Schritt b) endet, wenn gegenüber dem Startdruck p(a) das lokale Maximum des Druckanstiegs Δp(b) erreicht wird.

In einer Ausführungsform des erfindungsgemäßen Verfahrens beträgt die in Schritt b) zugegebene erste Teilmenge des Alkylenoxids (A) 1 Gew.-% bis 15 Gew.-% bevorzugt 2 Gew.-% bis 10 Gew.-% bezogen auf die Summe der in Schritt b) zugegebenen ersten Teilmenge des Alkylenoxids (A) und der in Schritt c) zugegebenen zweiten Teilmenge des Alkylenoxids (A).

In einer Ausführungsform des erfindungsgemäßen Verfahrens wird in Schritt b) eine geringe Katalysatoraktivität durch das Auftreten eines Maximaldrucks p_max(b) automatisch von einem Prozessleitsystem und/oder von einem Sicherheitssystem erkannt und für eine Alarmierung, bevorzugt für eine Alarmierung und automatische Abschaltung der Alkylenoxidzufuhr verwendet wird. Der Maximaldruck p_max(b) liegt dabei bei einem Wert von p(a) + Δp(b) + 0,5 bar, bevorzugt bei einem Wert von p(a) + Δp(b) + 0,3 bar. Die zusätzliche Überwachung des Maximaldrucks p_max(b) ist dabei für eine definierte Masse des insgesamt zugeführten Alkylenoxids m_AO1 aktiv, die so gewählt wird, dass sie im für die erwartete Länge des Schritts b) abdeckt und bis in die Anfangsphase des Schrittes c) reicht. Die Masse m_AO1 liegt dazu bei 5 Gew.-% bis 30 Gew.-% bevorzugt bei 10 Gew.-% bis 20 Gew.-% bezogen auf die Summe der in Schritt b) und in Schritt c) insgesamt zugegebenen Masse des Alkylenoxids (A).

In einer Ausführungsform des erfindungsgemäßen Verfahrens wird am Ende des Schrittes b erreichte des Alkylenoxidmassenstroms $\dot{m}_{AO}$(b-Ende) im Verhältnis zum Alkylenoxidmassenstrom $\dot{m}_{AO}$(c-Start) am Anfang des Schritts c im Bereich $0,5 \leq \dot{m}_{AO}$(b-Ende) / $\dot{m}_{AO}$(c-Start) $\leq 1$, bevorzugt im Bereich $0,8 \leq \dot{m}_{AO}$(b-Ende) / $\dot{m}_{AO}$(c-Start) $\leq 1$ liegt und der Massenstrom $\dot{m}_{AO}$(c) im Verlauf des Schritts c nicht über $\dot{m}_{AO}$(c-Start) hinaus angehoben wird.

Schritt c)

Mit dem Erreichen des maximalen Druckanstiegs Δp(b) endet Schritt b) und beginnt Schritt c).

Im erfindungsgemäßen Verfahren wird in Schritt c) eine zweite des Alkylenoxids (A) mit einem Massenstrom $\dot{m}_{AO}$(c) zur Suspension des aktivierten Doppelmetallcyanid-Katalysators (C) aus Schritt b) unter Bildung des Polyoxyalkylenpolyols zugegeben. Der Übergang von Schritt b) zu Schritt c) erfolgt ohne Unterbrechung der Alkylenoxidzufuhr.

Hierbei kann der Massenstrom $\dot{m}_{AO}$(c)in Schritt c) mit einer konstanten kontinuierlichen Dosierrate oder einer variierenden Dosierrate zugegeben werden. Im weiteren Verlauf des Schritts c) kann der Druck wieder zunehmen, wobei auch Drücke oberhalb des maximalen Druckanstiegs Δp(b) resultieren können.

In einer Ausführungsform des erfindungsgemäßen Verfahrens wird eine H-funktionelle Starterverbindung (L) in Schritt b) und Schritt c) oder in Schritt c), bevorzugt in Schritt c) kontinuierlich oder stufenweise bevorzugt kontinuierlich zugegeben, wobei die kontiunierliche Zugabe der H-funktionelle Starterverbindung (L) einer sogenannten CAOS Verfahrensführung (CAOS englisch: continuous addition of starter) entspricht.

In einer Ausführungsform des erfindungsgemäßen Verfahrens wird das Alkylenoxid (B) in Schritt c) kontinuierlich und/oder stufenweise bevorzugt kontinuierlich zugegeben.

In einer weniger bevorzugten Ausführungsform des erfindungsgemäßen Verfahrens wird das Polyoxyalkylenpolyol bevorzugt das Polyetherpolyol in Schritt c) kontinuierlich und/oder stufenweise bevorzugt kontinuierlich entnommen. Bevorzugt erfolgt dabei die kontinuierliche Entnahme des Polyoxyalkylenpolyols, bevorzugt des Polyetherpolyols bei gleichzeitig kontinuierlicher Zugabe der H-funktionellen Starterverbindung (L) und der zweiten Teilmenge des Alkylenoxids des Alkylenoxids (A).

In einer Ausführungsform des erfindungsgemäßen Verfahrens beträgt die Reaktionstemperatur in Schritt c) 110 ° C bis 170 ° C, bevorzugt 120 ° C bis 165 ° C. Dies ist vorteilhaft, da bei höheren Reaktions- bzw. Prozesstemperaturen von mindestens 110 ° C, bevorzugt mindestens 120 ° C die Reaktionswärme zur Produktion von Wasserdampf bei höheren Drücken genutzt werden kann. Der erzeugte Wasserdampf ist umso wertvoller, je höher sein Druck ist. Der thermodynamisch maximal erreichbare Wasserdampfdruck nimmt aufgrund der Dampfdruckkurve des Wassers mit steigender Reaktionstemperatur zu. So beträgt der Wasserdampfdruck bei 130 °C 2,7 bar absolut, bei 140 °C 3,6 bar absolut, bei 150 °C 4,8 bar absolut und bei 160 °C 6,2 bar absolut. Der aus der Reaktionswärme der Polymerisation erzeugte Wasserdampf kann für die Kopplung dieses Polymerisationsschrittes mit anderen Verfahrensschritten zur Herstellung von Polyoxyalkylenpolyolen als auch für die (Wärme)Integration mit anderen technisch-chemischen Verfahren genutzt werden. Bei einer Reaktionstemperatur von oberhalb 180 °C nimmt die Reaktionsgeschwindigkeit aufgrund thermischer Deaktivierung des DMC-Katalysators deutlich ab.

Während der Polymerisation in Schritt c) können die beschriebenen Temperaturgrenzen variiert werden, beispielsweise kann es sich als vorteilhaft heraus¬stellen die Reaktionstemperatur mit zunehmendem Reaktionsfortschritt anzuheben.

Generell sollte beim Einsatz von gerührten Reaktoren durch Auslegung und Einsatz handelsüblicher Rührorgane für eine gute Durchmischung des Reaktorinhaltes gesorgt werden, wobei hier insbesondere ein- oder mehrstufig angeordnete Rührer oder großflächig über die Füllhöhe wirkende Rührertypen geeignet sind (siehe z. B. Handbuch Apparate; Vulkan-Verlag Essen, 1. Aufl. (1990), S.188 - 208). Technisch besonders relevant ist hierbei eine im Mittel über den gesamten Reaktorinhalt eingetragene spezifische Mischleistung, die im Allgemeinen im Bereich von 0,2 bis 5 W/l liegt, mit entsprechend höheren lokalen Leistungseinträgen im Bereich der Rührorgane selbst und ggf. bei niedrigeren Füllständen. Um eine optimale Rührwirkung zu erzielen, können im Reaktor gemäß allgemeinem Stand der Technik Kombinationen aus Stromstörern (z. B. Flach- oder Rohrstromstörer) und Kühlschlangen (oder Kühlkerzen) angeordnet werden, die sich auch über den Behälterboden erstrecken können. Alternativ ist es auch möglich, die notwendige Durchmischung ausschließlich über einen Wärmetauscher geführten Umpumpkreislauf zu erzielen oder diesen zusätzlich zum Rühraggregat als weitere Mischkomponente zu betreiben, wobei der gesamte Reaktorinhalt nach Bedarf (typischerweise 1 bis 50 mal pro Stunde) umgepumpt wird. Die mittels Umpumpung, beispielsweise über einen außenliegenden Wärmetauscher über diesen oder bei Rückführung in den Reaktor über eine Düse oder Injektor, eingetragene spezifische Mischleistung beläuft sich ebenfalls auf Werte von im Mittel 0,2 bis 5 W/L, wobei diese auf das im Reaktor und den Umpumpkreislauf am Ende der Reaktionsphase befindliche Flüssigkeitsvolumen bezogen ist.

Für die Durchführung des erfindungsgemäßen Verfahrens sind die unterschiedlichsten Reaktortypen geeignet. Vorzugsweise werden zylinderförmige Behälter eingesetzt, welche ein Höhen-/Durchmesserverhältnis von 1:1 bis 10:1 besitzen. Als Reaktorböden kommen beispielsweise Kugel-, Klöpper-, Flach,- oder Konusböden in Frage.

In einer Ausführungsform des erfindungsgemäßen Verfahrens wird das Reaktionsgemisch nach Schritt c) in Schritt d) im Reaktor belassen oder in einen Nachreaktor überführt, um während einer definierten Nachreaktionszeit den Gehalt an freiem Alkylenoxid bevorzugt auf Werte von kleiner als 5 ppm zu reduzieren. Die Nachreaktion wird bei Temperaturen von 80 °C bis 180 °C betrieben, wobei die Nachreaktionszeit 10 min bis 60 min beträgt. Hierbei erfolgt während der Nachreaktion keine weitere Dosierung des Alkylenoxids, der H-funktionellen Startersubstanz und/oder des Doppelmetallcyanid (DMC)-Katalysators.

Gegebenenfalls kann das nach dem erfindungsgemäßen Verfahren erhaltene Polyoxyalkylenpolyol, bevorzugt das Polyetherpolyol von kleinen Mengen an nicht umgesetzten Alkylenoxiden im Vakuum, beispielsweise bei einem absoluten Druck von 1 bis 500 mbar, oder durch Strippen vollständig befreit werden. Durch Strippen werden flüchtige Bestandteile, wie beispielsweise (Rest-)Alkylen¬oxide, unter Einleiten von Inertgasen und/oder Wasserdampf in die Flüssigphase bei gleichzeitig angelegtem Vakuum (beispielsweise durch Durchleiten von Inertgas bei einem Absolutdruck von 5 bis 500 mbar) entfernt. Das Entfernen flüchtiger Bestandteile, wie beispielsweise nicht umgesetzter Alkylenoxide, entweder im Vakuum oder durch Strippen, erfolgt im Allgemeinen bei Temperaturen von 20 bis 200 °C, bevorzugt bei 50 bis 160 °C . Solche Strippvorgänge können auch in sogenannten Strippkolonnen durchgeführt werden, in denen dem Produktstrom ein Inertgas- oder Wasserdampfstrom entgegengeleitet wird. Bevorzugt werden zu diesem Zweck Strippkolonnen mit Füllkörpern oder Einbauten verwendet.

Den nach dem erfindungsgemäßen Verfahren hergestellten Polyoxyalkylenpolyolen können gegebenenfalls Alterungsschutzmittel wie z. B. Antioxidantien zugesetzt werden.

Das nach dem erfindungsgemäßen Verfahren erhältliche Polyoxyalkylenpolyol, bevorzugt das Polyetherpolyol kann allein oder gegebenenfalls im Gemisch mit mindestens einer weiteren isocyanat¬reaktive Kom¬ponente mit einem Polyisocyanat, gegebenenfalls in Gegenwart von mindestens einem Treib¬mittel, gegebenenfalls in Gegenwart von mindestens einem Katalysator und gegebenenfalls mit weiteren Zusatzstoffen wie z.B. Zellstabilisatoren umgesetzt werden und so als Komponente von massiven oder geschäumten Polyurethan¬en, z. B. Polyurethan-Weichschaum wie beispielsweise Polyurethan-Weichblockschaum und Polyurethan-Weichformschaum, dienen. Das nach dem erfindungsgemäßen Verfahren hergestellte Polyoxyalkylen¬polyol, bevorzugt das Polyetherpolyol kann insbesondere auch als Komponente für Kleb- und Dichtstoffmaterialien verwendet werden. Beispielsweise können sie als Vorläuferpolyole für die Herstellung silanterminierter Polyoxyalkylene dienen, die ihrerseits Einsatz in feuchtigkeitshärtenden Dichtstoffsystemen finden können.

Polyurethane, bevorzugt massive oder geschäumte Polyurethan¬e, insbesondere Polyurethan-Weichschäume wie beispielsweise Polyurethan-Weichblockschäume und Polyurethan-Weich¬formschäume oder Kleb- und Dichtstoffmaterialien, die die nach dem erfindungsgemäßen Verfahren hergestellten Polyoxyalkylenpolyole enthalten, sind ebenfalls Gegenstand der Erfindung.

**Beispiele**

Die Bestimmung der OH-Zahlen erfolgte gemäß der Vorschrift der DIN 53240. Die Viskositäten wurden mittels Rotationsviskosimeter (Physica MCR 51, Hersteller: Anton Paar) nach der Vorschrift der DIN 53018 ermittelt.

Das Zahlenmittel $M_n$ und das Gewichtsmittel $M_w$ des Molekulargewichts sowie der Polydispersitätsindex PDI ($M_w/M_n$) der Produkte wurde mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2xPSS SDV linear M, 8x300 mm, 5pm; RID-Detektor). Dabei wurden Polystyrolproben bekannter Molmasse zur Kalibrierung verwendet.

Eingesetzte Rohstoffe

Katalysator für die Alkylenoxidaddition (DMC-Katalysator):
Doppelmetallcyanid-Katalysator, enthaltend Zinkhexacyanocobaltat, tert.-Butanol und Polypropylenglykol mit einem zahlenmittleren Molekulargewicht von 1000 g/mol; beschrieben in WO-A 01/80994, Beispiel 6.

**Beispiel 1 (Vergleich):**

Ein mit Stickstoff inertisierter Druckreaktor wird ein Polyetherpolyol (OH-Funktionalität = 2; OH-Zahl = 154,8 mg KOH/g; basierend auf Propylenglykol und Propylenoxid; enthaltend 180 ppm DMC-Katalysator) als H-funktionelle Starterverbindung (A) bis zu einem spezifischen Füllgrad von 134,0 kg/m$^3$ (bezogen auf das freie Reaktorvolumen) gefüllt. Dieses Polyetherpolyol wurde zuvor mittels DMC-Katalyse hergestellt und anschließend 30 min unter Stickstoff im Vakuum gestrippt. Der Reaktorinhalt wird auf eine Temperatur von 125 °C aufgeheizt und ein Stickstoffstartdruck von p(a) = 0,04 bar absolut eingestellt. Der Stickstoffstartdruck wird im Prozessleitsystem registriert. Bei laufender Polyolumwälzung über den externen Wärmetauscher werden nun in der Aktivierungsdosierphase als erste Teilmenge des Alkylenoxids (B) 0,03 kg Propylenoxid pro kg der H-funktionelle Starterverbindung (A) innerhalb von 8 min dosiert. Der Reaktordruck erreicht im vorliegenden Beispiel während der Aktivierungsdosierphase einen maximalen Druck von p_max = 390 mbara und die Reaktionstemperatur steigt auf den Sollwert von 130 °C an.

Mit dem Stopp der Propylenoxidzufuhr endet die Aktivierungsdosierphase und die Aktivitätskontrollphase ohne Propylenoxidzufuhr beginnt. Während der Aktivitätskontrollphase wird der weitere Druckverlauf vom Prozessleitsystem erfasst und die Temperatur wird weiterhin auf einen Sollwert von 130°C geregelt. Der im Laufe der Aktivierungsdosierphase und Aktivitätskontrollphase maximal auftretende Druck p_peak wird vom Prozessleitsystem registriert. Die Aktivitätskontrollphase endet, sobald ausgehend vom Maximaldruck p_peak ein Mindestdruckabfall auf den Wert p_startpol festgestellt wird. Der Mindestdruckabfall p_peak - p_startpol ist festgelegt als die Hälfte des zuvor gemessenen Druckanstiegs p_peak - p(a) (hier 390 mbar - 40 mbar = 350 mbar). Der Mindestdruckabfall p_peak - p_startpol dient dabei zur Verifikation einer ausreichend hohen Katalysatoraktivität, welche aus Sicherheitsgründen erreicht werden muss, bevor die Propylenoxiddosierung in Schritt c) erfolgen darf.

Im vorliegenden Beispiel wird der Mindestdruckabfall nach einer Aktivitätskontrollphase von 5 min festgestellt. Danach beginnt Dosierung der zweiten Teilmenge des Propylenoxids (A) in Schritt c). Der Propylenoxidmassenstrom wird mit einer spezifischen Dosierrate von 25 kg/h pro m$^3$ Reaktionsvolumen erneut gestartet und dann schnell mit einer Steigerungsrate von 23,5 kg/h/min pro m$^3$ Reaktorvolumen angehoben. Nach der Dosierung von insgesamt 49 kg Propylenoxid pro m$^3$ Reaktorvolumen (inklusive der Propylenoxidmasse aus der Aktivitätsdosierungsphase) wird der maximale Propylenoxidmassenstrom von 354 kg/h Propylenoxid pro m$^3$ Reaktorvolumen erreicht. Nach Dosierung von insgesamt 0,3 kg Propylenoxid pro kg Anfangsstarter wird auch die zusätzliche Dosierung von Propylenglykol als H-funktionelle Starterverbindung (L) in einem festen Dosierverhältnis von 0,03647 kg Propylenglykol pro kg Propylenoxid gestartet. Die Reaktionstemperatur wird weiterhin auf einen Sollwert von 130°C geregelt. Die Dosierung von Propylenglykol und die Propylenoxid wird fortgeführt bis die für das angestrebte Endprodukt erforderlichen Mengen dosiert sind, wobei die Propylenglykoldosierung nach der Dosierung von 75,4% der insgesamt zuzuführenden Propylenoxidmasse beendet wird.

An Schritt c) schließt sich eine Nachreaktionsphase in Schritt d) zur Abreaktion noch nicht umgesetzter Monomere an, welche ebenfalls auf eine Solltemperatur von 130°C geregelt wird.

Der Gesamtzeitbedarf für den aus den vier beschriebenen Phasen bestehenden Reaktionszyklus beträgt im Vergleichsbeispiel 145 min.

Der auf diese Weise hergestellte Polyether weist eine OH-Zahl von 56,2 mg KOH/g und eine Viskosität (25 °C) von 357 mPas auf. Der Polydispersitätsindex PDI ($M_w/M_n$) beträgt 1,21.

**Beispiel 2:**

Es wird vorgegangen wie in Beispiel 1 (Vergleich), mit dem Unterschied, dass nach der Reaktorbefüllung und Einstellung der Starttemperatur (125 °C) und des Stickstoffstartdrucks p(a) von 0,04 bar absolut die Dosierung des Propylenoxids zwischen der Aktivierungsphase in Schritt b) und der eigentlichen Polymerisation (Propoxylierung) in Schritt c) nicht unterbrochen wird.

Das Dosierprofil des Propylenoxidstroms in Schritt c) und des später einsetzenden Propylenglykolstroms sind identisch mit dem der Propoxylierung in Schritt c) des Beispiels 1. Bereits nach der Dosierung von 44 kg Propylenoxid pro m$^3$ Reaktorvolumen wird die maximale Propylenoxiddosierrate von 354 kg/h Propylenoxid pro m$^3$ Reaktorvolumen erreicht. Nach Dosierung von insgesamt 0,3 kg Propylenoxid pro kg Anfangsstarter wird die zusätzliche Dosierung von Propylenglykol als H-funktionelle Verbindung (L) in Schritt c) in einem festen Dosierverhältnis von 0,03647 kg Propylenglykol pro kg Propylenoxid gestartet. Die Reaktionstemperatur wird weiterhin auf einen Sollwert von 130 °C geregelt. Die Dosierung von Propylenglykol und die Propylenoxid wird fortgeführt, bis die für das angestrebte Endprodukt erforderlichen Mengen dosiert sind, wobei die Propylenglykoldosierung nach der Dosierung von 75,4 % der insgesamt zuzuführenden Propylenoxidmasse beendet wird. Der Reaktordruck durchlief bereits während des Hochfahrens des Propylenoxidmassenstroms ein lokales Druckmaximum von 0,76 bar absolut, welches nach der Dosierung von ca. 31 kg Propylenoxid pro m$^3$ Reaktorvolumen erreicht wurde. Der maximale Druckanstieg im Schritt b) lag somit bei $\Delta p(b)$ = 0,72 bar. Hiermit endet Schritt b) und es beginnt Schritt c). Zu Beginn des Schritts c) fiel der Reaktordruck aufgrund der zunehmenden Katalysatoraktivität zunächst wieder bis auf 0,42 bar absolut ab, um anschließend aufgrund der zunehmenden Kompression des vorhandenen Stickstoffs wieder anzusteigen.

An Schritt c) schließt sich eine Nachreaktionsphase in Schritt d) zur Abreaktion noch nicht umgesetzter Monomere an, welche ebenfalls auf eine Solltemperatur von 130°C geregelt wird.

Durch die Vermeidung einer Aktivitätskontrollphase ohne Propylenoxidosierung konnte der Gesamtzeitbedarf für den Reaktionszyklus in diesem Beispiel auf 135 min gesenkt werden. Die um 10 min verkürzte Reaktionszykluszeit stellt eine relative Verkürzung von 6,9% dar, was einen wesentlichen Kapazitätsgewinn darstellt.

Der in diesem Beispiel hergestellte Polyether wies eine OH-Zahl von 56,2 mg KOH/g und eine Viskosität (25 °C) von 361 mPas auf. Der Polydispersitätsindex PDI ($M_w/M_n$) betrug 1,23.

## Patentansprüche

1. Verfahren zur Herstellung eines Polyoxyalkylenpolyols, bevorzugt eines Polyetherpolyols, umfassend der Reaktion einer H-funktionellen Starterverbindung (A) mit einem Alkylenoxid (B) in mindestens zwei Teilmengen in Gegenwart eines Doppelmetallcyanid-Katalysators (C), wobei das Verfahren folgende Schritte umfasst:

   a) Bereitstellen einer Suspension (D) enthaltend den Doppelmetallcyanid-Katalysator (C) und Einstellen eines Startdrucks p(a);
   b) Zugabe einer ersten Teilmenge des Alkylenoxids (B) mit einem Massenstrom $\dot{m}_{AO}(b)$ zu der Suspension (D) aus Schritt a) unter Bildung eines aktivierten Doppelmetallcyanid-Katalysators (C);
   c) Zugabe einer zweiten Teilmenge des Alkylenoxids (B) mit einem Massenstrom $\dot{m}_{AO}(c)$ zur Suspension des aktivierten Doppelmetallcyanid-Katalysators (C) aus Schritt b) unter Bildung des Polyoxyalkylenpolyols;

   wobei der Schritt b) ohne eine Unterbrechung der Alkylenoxidzufiihr in den Schritt c) übergeht;
   und wobei der gegenüber dem Startdruck p(a) auftretende maximale Druckanstieg Δp(b) in Schritt b) 0,0 bar < Δp(b) < 2,5 bar bevorzugt 0,1 bar < Δp(b) < 1,5 bar, besonders bevorzugt 0,2 bar < Δp(b) < 1,0 bar ist.

2. Verfahren gemäß Anspruch 1, wobei die H-funktionelle Starterverbindung (A) ein Polyetherpolyol, ein Polyesterpolyol, ein Polyetheresterpolyol, ein Polyethercarbonatpolyol, ein Polycarbonatpolyol und/oder ein Polyacrylatpolyol bevorzugt ein Polyetherpolyol ist.

3. Verfahren gemäß Anspruch 1 oder 2, wobei der Doppelmetallcyanid-Katalysator (C) in einer Konzentration von 0,0001 Gew.-% bis 0,1 Gew.-% bevorzugt von 0,001 Gew.-% bis 0,05 Gew.-% bezogen auf die Menge des herzustellenden Polyoxyalkylenpolyols, bevorzugt des Polyetherpolyols eingesetzt wird.

4. Verfahren gemäß einem der Ansprüche 1 bis 3, wobei der Doppelmetallcyanid-Katalysator (C) Zinkhexacyanokobaltat (III) enthält.

5. Verfahren gemäß einem der Ansprüche 1 bis 4, wobei der Doppelmetallcyanid-Katalysator (C) in der Suspension (D) in Schritt a) in einem Suspensionsmittel ohne H-funktionelle Gruppen (E-1) und/oder in einem Suspensionsmittel mit H-funktionellen Gruppen (E-2) bevorzugt in einem in einem Suspensionsmittel mit H-funktionellen Gruppen (E-2) vorliegt.

6. Verfahren gemäß Anspruch 5, wobei der Doppelmetallcyanid-Katalysator (C) in einem Suspensionsmittel mit freien H-funktionelle Gruppen (E-2) vorliegt und das Suspensionsmittel mit freien H-funktionellen Gruppen (E-2) ein Polyetherpolyol, ein Polyesterpolyol, ein Polyetheresterpolyol, ein Polyethercarbonatpolyol, ein Polycarbonatpolyol und/oder ein Polyacrylatpolyol bevorzugt ein Polyetherpolyol ist.

7. Verfahren gemäß Anspruch 6, wobei das Suspensionsmittel mit freien H-funktionellen Gruppen (E-2) die H-funktionelle Starterverbindung (A) ist.

8. Verfahren gemäß Anspruch 7, wobei die Suspension (D) in Schritt a) enthaltend den Doppelmetallcyanid-Katalysator (C) und die die H-funktionelle Starterverbindung (A) erhalten wird durch Umsetzung einer H-funktionellen Starterverbindung (F) mit einem Alkylenoxid (G) in Gegenwart des Doppelmetallcyanid-Katalysators (H), wobei die Äquivalentmolmasse der H-funktionellen Starterverbindung (F) kleiner ist als die der H-funktionellen Starterverbindung (A).

9. Verfahren gemäß Anspruch 7, wobei der Doppelmetallcyanid-Katalysators (H) identisch mit dem Doppelmetallcyanid-Katalysators (C) ist.

10. Verfahren gemäß Anspruch 5 oder 6, wobei das Suspensionsmittel mit freien H-funktionellen Gruppen (A) das Polyoxyalkylenpolyol, bevorzugt das Polyetherpolyol ist.

11. Verfahren gemäß Anspruch 10, wobei die Suspension (D) in Schritt a) enthaltend den Doppelmetallcyanid-Katalysator (C) und das Polyoxyalkylenpolyol bevorzugt das Polyetherpolyol erhältlich ist, bevorzugt erhalten wird durch Umsetzung einer H-funktionellen Starterverbindung (I) mit einem Alkylenoxid (J) in Gegenwart eines Doppelmetallcyanid-Katalysators (K) erfolgt.

12. Verfahren gemäß einem der Ansprüche 1 bis 11, wobei die in Schritt b) zugegebene erste Teilmenge des Alkylenoxids (A) 1 Gew.-% bis 15 Gew.-% bevorzugt 2 Gew.-% bis 10 Gew.-% bezogen auf die Summe der in Schritt b) zugegebenen ersten Teilmenge des Alkylenoxids (A) und der in Schritt c) zugegebenen zweiten Teilmenge des Alkylenoxids (A) beträgt.

13. Verfahren gemäß einem der Ansprüche 1 bis 12, wobei eine H-funktionelle Starterverbindung (L) in Schritt b) und in Schritt c) oder in Schritt c), bevorzugt in Schritt c) kontinuierlich oder stufenweise, bevorzugt kontinuierlich zugegeben wird, wobei die Äquivalentmolmasse der H-funktionellen Starterverbindung (L) kleiner ist als die der H-funktionellen Starterverbindung (A).

14. Verfahren gemäß einem der Ansprüche 1 bis 13, wobei das Alkylenoxid (B) in Schritt c) kontinuierlich und/oder stufenweise bevorzugt kontinuierlich zugegeben wird.

Europäisches Patentamt
European Patent Office
Office européen des brevets

**EUROPÄISCHER RECHERCHENBERICHT**

**Nummer der Anmeldung**

**EP 23 15 0581**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/161577 A1 (LORENZ KLAUS [DE] ET AL) 30. Mai 2019 (2019-05-30) * Beispiele 1-13 * | 1-14 | INV. C08G65/26 |
| X,D | EP 1 206 498 B1 (BAYER AG [DE]) 10. Dezember 2003 (2003-12-10) * Beispiel 1 * * Ansprüche 1-5 * | 1-14 | |
| A,D | WO 97/23544 A1 (ARCO CHEM TECH [US]; ARCO CHEM TECH NL BV [NL]) 3. Juli 1997 (1997-07-03) * Ansprüche 1-15 * * Beispiele 1-7 * | 1-14 | |

RECHERCHIERTE SACHGEBIETE (IPC)

C08G
C09J

Der vorliegende Recherchenbericht wurde für alle Patentansprüche erstellt

| Recherchenort | Abschlußdatum der Recherche | Prüfer |
|---|---|---|
| Den Haag | 11. Mai 2023 | Pouilley, Delphine |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 15 0581

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2023

| Im Recherchenbericht angeführtes Patentdokument | Datum der Veröffentlichung | Mitglied(er) der Patentfamilie | | Datum der Veröffentlichung |
|---|---|---|---|---|
| US 2019161577 A1 | 30-05-2019 | CN | 109071795 A | 21-12-2018 |
| | | JP | 6931362 B2 | 01-09-2021 |
| | | JP | 2019515119 A | 06-06-2019 |
| | | KR | 20190008212 A | 23-01-2019 |
| | | SG | 11201809538T A | 29-11-2018 |
| | | US | 2019161577 A1 | 30-05-2019 |
| | | WO | 2017194709 A1 | 16-11-2017 |
| EP 1206498 B1 | 10-12-2003 | AT | 256158 T | 15-12-2003 |
| | | AU | 6697700 A | 05-03-2001 |
| | | BR | 0012994 A | 07-05-2002 |
| | | CA | 2381188 A1 | 15-02-2001 |
| | | CN | 1368989 A | 11-09-2002 |
| | | CZ | 293452 B6 | 14-04-2004 |
| | | DE | 19937114 A1 | 15-02-2001 |
| | | EP | 1206498 A1 | 22-05-2002 |
| | | ES | 2213034 T3 | 16-08-2004 |
| | | HK | 1049344 A1 | 09-05-2003 |
| | | HU | 0202848 A2 | 28-12-2002 |
| | | JP | 2003506543 A | 18-02-2003 |
| | | KR | 20020019605 A | 12-03-2002 |
| | | MX | PA02001255 A | 12-08-2002 |
| | | PL | 353099 A1 | 20-10-2003 |
| | | PT | 1206498 E | 30-04-2004 |
| | | US | 6486361 B1 | 26-11-2002 |
| | | WO | 0110933 A1 | 15-02-2001 |
| WO 9723544 A1 | 03-07-1997 | AR | 005181 A1 | 14-04-1999 |
| | | AU | 715766 B2 | 10-02-2000 |
| | | BR | 9612255 A | 13-07-1999 |
| | | CN | 1208426 A | 17-02-1999 |
| | | CZ | 293882 B6 | 18-08-2004 |
| | | DE | 69634930 T2 | 20-04-2006 |
| | | EP | 0868468 A1 | 07-10-1998 |
| | | ES | 2243955 T3 | 01-12-2005 |
| | | JP | 4102902 B2 | 18-06-2008 |
| | | JP | 2000513389 A | 10-10-2000 |
| | | KR | 19990071642 A | 27-09-1999 |
| | | PL | 327313 A1 | 07-12-1998 |
| | | RU | 2178426 C2 | 20-01-2002 |
| | | TW | 420690 B | 01-02-2001 |
| | | US | 5767323 A | 16-06-1998 |
| | | WO | 9723544 A1 | 03-07-1997 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1206498 B1
- WO 9723544 A
- EP 1359177 A
- US 7304172 B2
- US 20120165549 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A

**In der Beschreibung aufgeführte Nicht-Patentliteratur**

- **M. H. CHISHOLM et al.** *Macromolecules,* 2002, vol. 35, 6494
- **S. D. ALLEN.** *J. Am. Chem. Soc.,* 2002, vol. 124, 14284
- *Chemical Communications,* 2011, vol. 47, 141-163
- Ullmann's Encyclopedia of Industrial Chemistry. 1992, vol. B4, 167
- **M. IONESCU.** Chemistry and Technology of Polyols for Polyurethanes. Rapra Techn. Ltd, 2016
- Handbuch Apparate. Vulkan-Verlag, 1990, 188-208